# FASCICULE DE BREVET EUROPEEN

(11) **EP 3 024 333 B1**
(45) Date de publication et mention de la délivrance du brevet: **25.09.2019**
(21) Numéro de dépôt: 14790154.0
(22) Date de dépôt: 22.07.2014
(51) Int. Cl.: A21D 8/04, B67D 7/02, F25D 23/06, A21C 1/14

(54) **DISPOSITIF DE DISTRIBUTION DE LEVURE EN BOULANGERIE ET SYSTÈME DE DISTRIBUTION DE LEVURE EN BOULANGERIE**
VORRICHTUNG ZUR AUSGABE VON HEFE IN EINER BÄCKEREI UND SYSTEM ZUR AUSGABE VON HEFE IN EINER BÄCKEREI
DEVICE FOR DISPENSING YEAST IN A BAKERY AND SYSTEM FOR DISPENSING YEAST IN A BAKERY

(30) Priorité: 24.07.2013 FR 1357311
(43) Date de publication de la demande: 01.06.2016
(73) Titulaire: Lesaffre et Compagnie, 75001 Paris (FR)
(72) Inventeur: PICAVET, Florent, F-59700 Marcq en Baroeul (FR)
(74) Mandataire: Cabinet Plasseraud
(86) Numéro de dépôt international: PCT/FR2014/051894
(87) Numéro de publication internationale: WO 2015/011403

(56) Documents cités:
- EP-A1- 0 792 930
- CA-A1- 2 255 339
- DE-A1-102009 047 245
- US-A- 2 255 280
- US-A1- 2008 302 824
- US-A1- 2012 067 076

## Description

### DOMAINE DE L'INVENTION

L'invention concerne les dispositifs de distribution de levure en boulangerie et les systèmes de distribution de levure en boulangerie associés.

### CONTEXTE DE L'INVENTION

Selon un art antérieur, il est connu d'installer tous les éléments du dispositif de distribution de levure sur place au niveau du système de distribution de levure existant dans la boulangerie du client. Cette boulangerie possède habituellement déjà une chambre froide dans laquelle les éléments du dispositif de distribution de levure vont devoir être installés sur place. Cette installation « in situ » peut être totalement adaptée à la topologie existante de la boulangerie, et en particulier à la topologie existante de la chambre froide. Cependant, cette installation sur place peut se révéler relativement coûteuse. En particulier, pour les boulangeries de taille relativement modeste, typiquement correspondant à une consommation en levure hebdomadaire limitée, comme par exemple moins de 1000 litres de levure par semaine, ce coût d'installation sur place peut être considéré comme trop important.

Il pourrait être envisagé de fournir une chambre froide complète intégrant déjà tous les éléments nécessaires, pour amortir les coûts. Toutefois, un tel dispositif ferait double emploi avec la chambre froide souvent déjà existante dans la boulangerie. Par ailleurs, cette chambre froide intégrée pourrait être de taille trop réduite pour permettre d'y loger autre chose que le réservoir de levure liquide.

US2012/0067076 divulgue un dispositif selon le préambule de la revendication 1.

### RESUME DE L'INVENTION

Le but de la présente invention est de fournir un dispositif de distribution de levure et un système de distribution de levure associé palliant au moins partiellement les inconvénients précités.

Plus particulièrement, l'invention vise à fournir un dispositif de distribution de levure et un système de distribution de levure associé qui, tout en utilisant la chambre froide existant déjà sur place dans la boulangerie, présente un surcoût d'installation qui soit moindre que dans l'art antérieur. Pour cela, l'invention envisage de fournir des panneaux, interne et externe à la chambre froide, sur lesquels tout ou partie des éléments nécessaires sont déjà pré-montés, de manière à n'avoir plus qu'à fixer ces panneaux de part et d'autre d'une paroi de la chambre froide, avec une réduction, voire une minimisation, des opérations de montage sur place lors de l'installation.

A cette fin, la présente invention propose un dispositif de distribution de levure liquide en boulangerie, comprenant : un panneau interne de chambre réfrigérée sur lequel est pré-monté un circuit interne de circulation de levure liquide qui est destiné à être relié à un réservoir de levure liquide et qui comprend un ensemble de pompage ; un panneau externe de chambre réfrigérée sur lequel sont pré-montés un dispositif de dosage de levure liquide et une table de dosage destinée à recevoir un récipient à remplir d'une quantité de levure liquide dosée par ledit dispositif de dosage de levure liquide ; ledit panneau interne et ledit panneau externe étant structurés de manière à être destinés à être fixés en sandwich sur la paroi d'une chambre réfrigérée destinée à contenir ledit réservoir ; ledit dispositif de dosage de levure liquide étant destiné à être relié, au travers d'une paroi de chambre réfrigérée, audit circuit interne.

A cette fin, la présente invention propose aussi un système de distribution de levure liquide en boulangerie, comprenant : une chambre réfrigérée ; un réservoir de levure liquide situé dans ladite chambre réfrigérée ; un dispositif de distribution de levure liquide en boulangerie selon l'une quelconque des revendications précédentes, qui est monté en sandwich sur une paroi de ladite chambre réfrigérée et qui est relié audit réservoir de manière à pouvoir pomper de la levure liquide hors dudit réservoir.

Suivant des modes de réalisation préférés, l'invention comprend une ou plusieurs des caractéristiques suivantes qui peuvent être utilisées séparément ou en combinaison partielle entre elles ou en combinaison totale entre elles.

De préférence, le dispositif de distribution de levure comprend aussi une cuve de nettoyage pré-montée sur ledit panneau externe et située sous ladite table de dosage et un dispositif de dosage d'eau de nettoyage pré-monté sur ledit panneau externe, destiné à alimenter ladite cuve de nettoyage et destiné à être reliée à une arrivée d'eau de nettoyage. Ainsi, la présence de la cuve de nettoyage permet, tout en évitant la chute de levure sur le sol, d'avoir un point d'entrée pour l'introduction du détergent dans le circuit de lavage, avec ou sans recyclage de l'eau de nettoyage. La cuve de nettoyage sert aussi de réservoir dont le volume d'eau de nettoyage contenu peut varier, c'est-à-dire de réservoir dans le circuit de lavage, avec ou sans recyclage de l'eau de nettoyage.

De préférence, le dispositif de distribution de levure liquide comprend, en aval dudit dispositif de dosage d'eau de nettoyage, une sortie d'eau de nettoyage orientable manuellement soit vers ladite cuve soit vers un tuyau interne d'évacuation non communiquant avec le fond de ladite cuve. Ainsi, la commutation entre circuit de lavage avec recyclage et circuit de lavage sans recyclage, peut être effectuée très simplement, manuellement et mécaniquement, donc avec un risque de panne quasiment inexistant.

De préférence, ladite cuve présente une sortie vers un circuit de recyclage d'eau de nettoyage et ladite cuve est en forme de couronne, de préférence cylindrique, disposée autour dudit tuyau interne d'évacuation. Cela correspond à une réalisation particulièrement compacte de la commutation entre circuit de lavage avec recyclage et circuit de lavage sans recyclage. Cette réalisation particulièrement compacte la rend d'autant plus apte à être pré-montée sur le panneau externe.

De préférence, ladite sortie d'eau de nettoyage présente une partie pivotante, de préférence au moins doublement coudée. Cela correspond à une réalisation structurelle particulièrement simple, pour pouvoir pivoter simplement, pour passer de la position circuit de lavage avec recyclage à la position circuit de lavage sans recyclage.

De préférence, ledit dispositif de dosage de levure liquide et ledit dispositif de dosage d'eau de nettoyage sont reliés à une sortie commune. Cela correspond à une réalisation particulièrement compacte des sorties des dispositifs de dosage. Cette réalisation particulièrement compacte la rend d'autant plus apte à être pré-montée sur le panneau externe.

De préférence, aucune soudure n'est réalisée lors de l'installation des panneaux sur la paroi de chambre réfrigérée. Ainsi, lors de l'installation sur site des panneaux interne et externe, la présence d'aucun installateur hautement qualifié comme un soudeur n'est nécessaire, la présence d'un installateur normalement qualifié suffit, ce qui rend d'autant plus intéressante et moins coûteuse l'utilisation de panneaux interne et externe pré-montés.

De préférence, ledit dispositif de dosage de levure liquide est automatique et associé à un système de pesage lequel est intégré à ladite table de dosage. Ce système complètement automatisé est intéressant et ce, d'autant plus qu'il ne nécessite pas une installation compliquée sur place, puisqu'il a pu être également pré-monté sur le panneau externe.

De préférence, un débitmètre de levure liquide pré-monté sur le panneau interne, ledit circuit interne comprenant un embranchement relié audit débitmètre. Ce débitmètre de levure liquide permet la télédistribution de levure liquide à un pétrin physiquement assez éloigné de la chambre froide, ce qui est intéressant et ce, d'autant plus qu'il ne nécessite pas une installation compliquée sur place, puisqu'il a pu être également pré-monté sur le panneau interne.

De préférence, ledit circuit interne comprend un autre embranchement destiné à traverser une paroi de chambre réfrigérée. De préférence, ledit circuit interne comprend aussi une connexion d'eau pré-montée sur le panneau interne, destinée à être reliée à une arrivée d'eau. De préférence, ledit circuit interne comprend un filtre à levure situé en aval de l'ensemble de pompage. Ces éléments précédemment mentionnés permettent une utilisation plus complète et plus riche du dispositif de distribution de levure liquide, ce qui est intéressant et ce, d'autant plus qu'il ne nécessite pas une installation compliquée sur place, puisqu'il a pu être également pré-monté sur le panneau interne.

De préférence, tous les raccords de canalisation sont pré-montés sur le panneau interne. Ainsi, ils sont cachés dans la chambre froide et ne sont pas au contact de l'extérieur, où ils pourraient être plus facilement salis ou endommagés. De préférence, une ou plusieurs vannes sont pré-montées sur le panneau interne. Le panneau interne, chargé de très nombreux éléments, tous pré-montés dessus, est particulièrement avantageux en termes de simplicité et de facilité d'installation et ce, malgré le nombre et la complexité des éléments qu'il intègre.

De préférence, le montage dudit dispositif de distribution de levure liquide est autoporteur par pression des panneaux interne et externe l'un et l'autre contre ladite paroi de chambre réfrigérée : c'est un type de montage en sandwich. Ainsi, l'installation tout en restant simple et aisée, car ne nécessitant pas l'installation sur place d'éléments de soutien des panneaux interne et externe sur la paroi de la chambre froide, va quand même être plutôt robuste.

De préférence, ledit réservoir est déplaçable de façon autonome par rapport à ladite chambre réfrigérée. Cela assure un réapprovisionnement aisé en levure liquide au cours du temps, et cela ne nécessite pas d'autre aménagement dans la chambre froide que la pose des deux panneaux interne et externe.

De préférence, la capacité dudit réservoir de levure liquide est comprise entre 100 litres et 1000 litres, de préférence comprise entre 100 litres et 600 litres ou entre 300 litres et 1000 litres, encore plus de préférence comprise entre 300 litres et 600 litres. En effet, le dispositif de distribution de levure liquide et le système de distribution de levure liquide associé, présentent un compromis optimal entre efficacité et coût de fabrication et d'installation, pour ce type de capacité intermédiaire correspondant à une boulangerie de taille moyenne. L'installation seulement sur site de plus d'éléments permet au contraire de mieux optimiser les boulangeries de grande taille.

De préférence, ledit système est un système de télédistribution comprenant un débitmètre de levure liquide pré-monté sur ledit panneau interne et une tuyauterie longue d'au moins plusieurs mètres, de préférence supérieure à 10 mètres, située en aval du débitmètre. Cette facilité de télédistribution reste compatible avec l'installation simplifiée d'un dispositif comprenant essentiellement deux panneaux interne et externe avec la plupart des éléments pré-montés sur ces panneaux.

De préférence, le système de distribution de levure liquide comprend aussi une armoire esclave de consigne de quantité de levure reliée à une armoire maître de consigne de quantité de levure située sur la même cloison que ledit panneau externe. La compacité du panneau externe pré-monté facilite l'ajout, sur la même paroi de chambre froide, de cet élément supplémentaire qui n'est quant à lui toutefois pas pré-monté.

De préférence, le système de distribution de levure liquide comprend aussi une connexion de recyclage qui est reliée du côté panneau externe à ladite sortie de ladite cuve de nettoyage et qui est reliée de manière intermittente du côté panneau interne à l'ensemble de pompage. Ainsi, le circuit de lavage avec recyclage de l'eau de nettoyage peut être facilement implémenté malgré un ensemble de pompage situé du côté du panneau interne dans la chambre froide.

De préférence, la levure liquide est soit de la crème de levain, soit de la levure liquide proprement dite, laquelle est de préférence stabilisée. De préférence, la température de ladite chambre réfrigérée est régulée et comprise entre 1°C et 7°C, et de préférence comprise entre 2°C et 4°C.

De préférence, un procédé d'installation d'un système de distribution de levure liquide en boulangerie selon l'invention comprend une étape dans laquelle les trous correspondant à des passages de connexion entre panneaux interne et externe à travers une paroi de chambre réfrigérée sont représentés sur un patron de trous à percer dans la paroi de chambre réfrigérée, lequel patron est fixé sur ladite paroi de chambre réfrigérée, afin de pouvoir percer lesdits trous. Le montage sur place est ainsi plus facile et plus rapide.

De préférence, un dispositif de dosage est une vanne, manuelle ou automatique, ou un robinet, manuel ou automatique.

Le dispositif de distribution de levure liquide et le système de distribution de levure liquide associé peuvent avantageusement être réalisés sous forme d'un module de base auquel peuvent être ajoutées une ou plusieurs options.

Ce module de base comprend préférentiellement le panneau interne de chambre réfrigérée sur lequel est pré-monté un circuit interne de circulation de levure liquide qui est destiné à être relié à un réservoir de levure liquide et qui comprend un ensemble de pompage ainsi que le panneau externe de chambre réfrigérée sur lequel sont pré-montés un dispositif de dosage de levure liquide et une table de dosage destinée à recevoir un récipient à remplir d'une quantité de levure liquide dosée par le dispositif de dosage de levure liquide. Le panneau interne et le panneau externe sont structurés de manière à être destinés à être fixés en sandwich sur la paroi d'une chambre réfrigérée destinée à contenir ledit réservoir. Le dispositif de dosage de levure liquide est destiné à être relié, au travers d'une paroi de chambre réfrigérée, audit circuit interne. Le panneau interne du module de base comprend avantageusement aussi un filtre à levure pré-monté, situé en aval de l'ensemble de pompage et intégré au circuit interne. Le panneau externe du module de base comprend aussi avantageusement une cuve de nettoyage pré-montée et située sous la table de dosage. Le panneau externe du module de base comprend aussi avantageusement un dispositif de dosage d'eau de nettoyage pré-monté, destiné à alimenter la cuve de nettoyage et destiné à être reliée à une arrivée d'eau de nettoyage. A ces éléments pré-montés sur les panneaux interne et externe, peuvent s'ajouter avantageusement dans le module de base un tuyau flexible de raccordement au réservoir de levure liquide, ainsi qu'un raccordement sur réseau d'eau et un raccordement sur réseau d'évacuation d'eau.

A ce module de base, peut s'ajouter une première option de dosage pondéral manuel ou automatique, comprenant un système de pesage qui est ajouté à la table de dosage et qui peut être avantageusement simplement une bascule posée sur la table de dosage, et qui sera associé au dispositif de dosage de levure liquide du module de base.

A ce module de base, peut s'ajouter une deuxième option de dosage direct dans le pétrin sans pousse à l'eau, intégrant tuyauterie supplémentaire et débitmètre.

A ce module de base, peut s'ajouter une troisième option de dosage direct dans le pétrin avec pousse à l'eau, intégrant tuyauterie supplémentaire et débitmètre.

Dans les systèmes réalisant un dosage direct au pétrin, le débitmètre peut être placé juste à côté du pétrin.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'un panneau externe d'un dispositif de distribution de levure liquide en boulangerie selon un mode de réalisation de l'invention.
La figure 2 représente schématiquement un exemple d'un panneau interne d'un dispositif de distribution de levure liquide en boulangerie selon un mode de réalisation de l'invention.
La figure 3 représente schématiquement un exemple de connexion entre les différents éléments des panneaux interne et externe d'un dispositif de distribution de levure liquide en boulangerie selon un mode de réalisation de l'invention.
La figure 4 représente schématiquement un exemple d'un système de distribution de levure liquide en boulangerie selon un mode de réalisation de l'invention, correspondant à un système de dosage au pichet.
La figure 5 représente schématiquement un exemple d'un système de distribution de levure liquide en boulangerie selon un mode de réalisation de l'invention, correspondant à un système de dosage direct au pétrin sans pousse à l'eau.
La figure 6 représente schématiquement un exemple d'un système de distribution de levure liquide en boulangerie selon un mode de réalisation de l'invention, correspondant à un système de dosage direct au pétrin avec pousse à l'eau.
La figure 7 représente schématiquement un exemple d'un système de distribution de levure liquide en boulangerie selon un mode de réalisation de l'invention, dans une configuration de lavage hebdomadaire du système avec recyclage de l'eau de lavage.
Les figures 8 et 9 représentent schématiquement des parties et des détails du système représenté sur la figure 7.
Les figures 10 et 11 représentent schématiquement des parties et des détails du système représenté sur la figure 7, mais dans une configuration de lavage hebdomadaire du système avec évacuation de l'eau de lavage.
La figure 12 représente très schématiquement un exemple de montage en sandwich des panneaux interne et externe qui enserrent la paroi de chambre froide de manière à rendre le montage autoporteur.

### DESCRIPTION DETAILLEE DE L'INVENTION

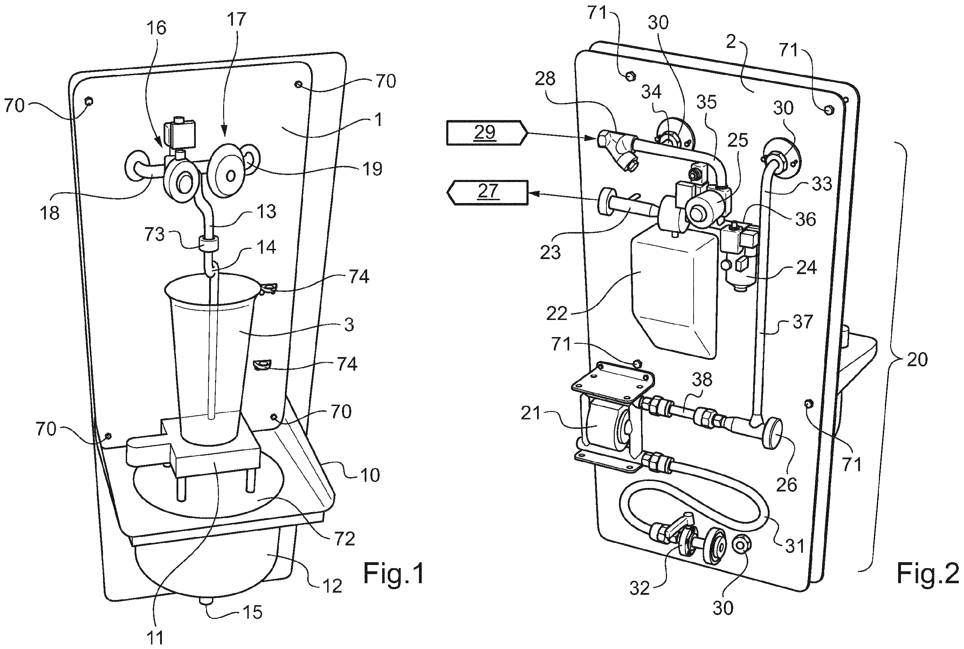

L'échelle des figures 1, 2, 9 et 11 est de préférence une échelle de 1/10. Une chambre réfrigérée est soit une chambre froide, soit un réfrigérateur.

La figure 1 représente schématiquement un exemple d'un panneau externe d'un dispositif de distribution de levure liquide en boulangerie selon un mode de réalisation de l'invention. Le panneau externe 1 sera fixé sur la paroi de chambre froide à l'aide de longues vis 70 traversant la paroi de chambre froide, par exemple à l'aide de quatre longues vis 70. Le panneau externe 1 est de préférence en métal, avantageusemnet en inox. Sur ce panneau externe 1, sont pré-montés plusieurs éléments. Une table de dosage 10 est fixée sensiblement orthogonalement au plan du panneau externe 1. Cette table de dosage 10 porte une cuve de nettoyage 12 sous laquelle se trouve une sortie d'évacuation d'eau 15. De préférence, la table de dosage 10 intègre un système de pesage 11, mais ce n'est pas obligatoire. Le système de pesage 11 est alors situé sur le dessus de la table de dosage 10. La cuve de nettoyage 12 est fermée par un couvercle 72 lorsqu'elle n'a pas besoin d'être utilisée. Ce couvercle 72 supporte une table de dosage 10 sur laquelle est posé un pichet 3. Le pichet 3 est complètement autonome par rapport à la table de dosage 10. Sur le panneau externe 1, débouchent une arrivée 18 de levure liquide et une arrivée 19 d'eau de nettoyage. Une vanne de dosage 16 de levure liquide, automatique, est disposée en aval de l'arrivée 18 de levure liquide. Une vanne de dosage 17 d'eau de nettoyage, manuelle, est disposée en aval de l'arrivée 19 d'eau de nettoyage.

Une sortie 13 commune à la vanne de dosage 16 de levure liquide et à la vanne de dosage 17 d'eau de nettoyage joue donc à la fois le rôle de sortie 13 de levure liquide et de sortie 13 d'eau de nettoyage. Cette sortie commune 13 comprend une partie pivotante 14, qui est pivotante autour de la bague 73 et qui est doublement coudée, de manière à présenter la forme générale suivante de haut en bas : une portion verticale haute, une portion horizontale, une portion verticale basse. La bague 73 permet de dévisser la partie pivotante 14 qui est amovible et qui peut donc être séparée du reste de la sortie commune 13. La portion verticale basse de la partie pivotante 14 de la sortie commune 13 plonge dans le pichet 3. En réalité cette partie pivotante 14 est amovible et n'est pas utilisée lors du remplissage du pichet 3 avec de la levure liquide ; cette partie pivotante 14 est utilisée lors du nettoyage du système de distribution de levure liquide. Lorsque cette partie pivotante 14 n'est pas utilisée, elle peut être rangée contre le panneau externe 1, sur les crochets 74.

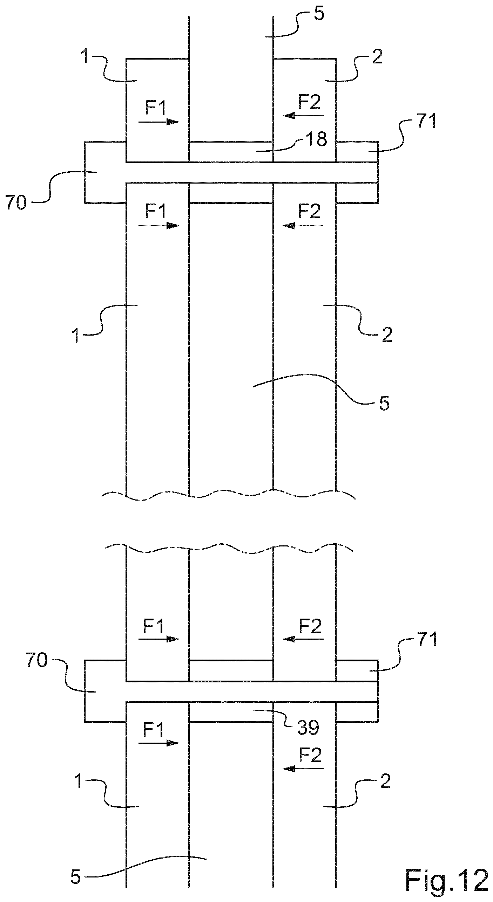

La figure 2 représente schématiquement un exemple d'un panneau interne d'un dispositif de distribution de levure liquide en boulangerie selon un mode de réalisation de l'invention. Le panneau interne 2 sera fixé sur la paroi de chambre froide à l'aide de boulons 71 vissés sur les longues vis 70 traversant la paroi de chambre froide par exemple à l'aide d'un montage en sandwich comme celui représenté sur la figure 12. Le panneau interne 2 est de préférence en inox. Sur ce panneau interne 2, sont pré-montés plusieurs éléments appartenant à un circuit interne 20 de circulation de levure liquide destiné à être relié à un réservoir de levure liquide afin d'être alimenté en levure liquide. Pour assurer l'étanchéité des connexions traversant la paroi de la chambre froide sur laquelle les panneaux interne 2 et externe 1 sont fixés, des raccords 30 sont pré-montés, avantageusement tous sur le panneau interne 2 et non pas sur le panneau externe 1. Contre le panneau interne 2 est fixé un ensemble de pompage 21. En amont de l'ensemble de pompage 21, par rapport au sens de circulation de la levure liquide, est disposé un flexible de raccordement terminé par une vanne papillon manuelle 32 laquelle est destinée à être reliée à un réservoir de levure liquide.

En aval de l'ensemble de pompage 21, par rapport au sens de circulation de la levure liquide, est fixée une connexion 38, puis un filtre 26 de levure liquide, filtrant la levure liquide qui circule, puis une connexion 37 qui aboutit à un embranchement. A partir de cet embranchement, une branche continue sous la forme d'une connexion 33 pour traverser ensuite la paroi de chambre froide et aboutir du côté du panneau externe 1, tandis que sur l'autre branche se trouve une vanne 36 automatique. Une arrivée d'eau 29, après avoir traversé un filtre 28 d'eau qui filtre l'eau qui circule, se sépare en deux branches, dont l'une continue sous la forme d'une connexion 34 pour traverser ensuite la paroi de chambre froide et aboutir du côté du panneau externe 1, et dont l'autre se prolonge par une connexion 35 sur laquelle se trouve une vanne 25 automatique. En aval de la vanne 25 automatique est fixé un débitmètre 22 suivi d'une connexion 23 aboutissant à une sortie 27 destinée à être reliée à une tuyauterie externe courant jusqu'au pétrin, afin de pouvoir réaliser une télédistribution de levure liquide directement au pétrin éloigné de la chambre froide.

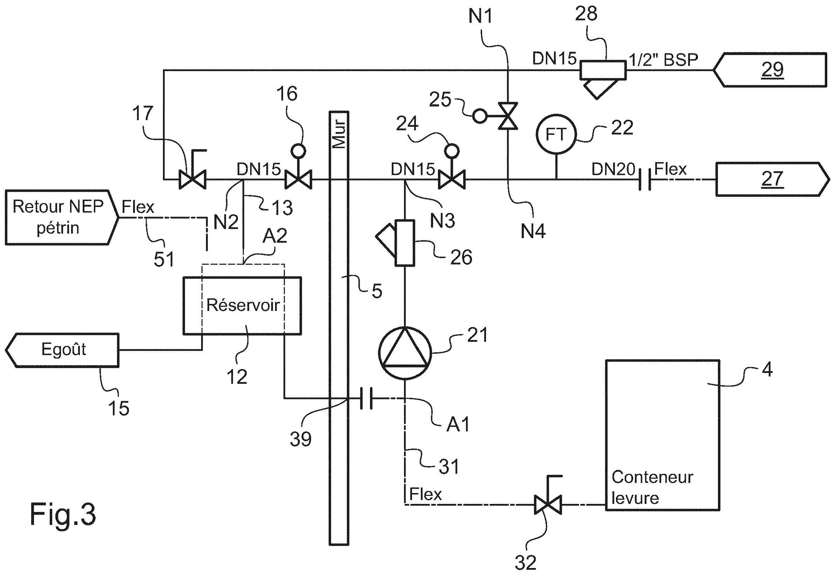

La figure 3 représente schématiquement un exemple de connexion entre les différents éléments des panneaux interne et externe d'un dispositif de distribution de levure liquide en boulangerie selon un mode de réalisation de l'invention. Le circuit global de circulation, de levure liquide et/ou d'eau, comprend plusieurs noeuds, N1 à N4, correspondant à des embranchements, et des aiguillages A1 à A2, correspondant à différentes possibilités de raccordement. Les entrées de l'extérieur sont le réservoir de levure liquide 4, l'arrivée 29 d'eau, le retour d'eau de nettoyage en provenance du pétrin distant raccordé à un flexible 51. Ce flexible 51 permet au liquide qui le traverse de se déverser dans la cuve 12 de nettoyage qui fait aussi office de réservoir de volume variable dans le circuit de circulation d'eau. Les entrées vers l'extérieur sont la sortie 27 vers le pétrin et la sortie d'évacuation 15 d'eau de nettoyage usée.

Entre l'arrivée 29 d'eau et le noeud 1 se trouve le filtre 28 d'eau. Entre le noeud N1 et le noeud N2 se trouve une vanne 17 manuelle. Entre le noeud N2 et le noeud N3 se trouvent successivement une vanne 17 automatique et la traversée de la paroi 5 de chambre froide. Entre le noeud N3 et le noeud N4 se trouve une vanne automatique 24. Entre le noeud N4 et la sortie 27 se trouve le débitmètre 22. Entre le noeud N1 et le noeud N4 se trouve une vanne 25 automatique. Lorsque la vanne 32 manuelle est raccordée au réservoir 4 de levure liquide, entre le réservoir 4 de levure liquide et le noeud N3 se trouvent successivement le flexible 31, l'ensemble de pompage 21, le filtre 26 de levure liquide. Lorsque la vanne 32 manuelle est raccordée à la connexion de recyclage 39, entre le noeud N2 et le noeud N3, se trouvent successivement la sortie 13, la cuve 12 de nettoyage, la connexion de recyclage 39, le flexible 31, l'ensemble de pompage 21, le filtre 26 de levure liquide. Lorsque le nettoyage touche à sa fin, l'eau de nettoyage usée peut être évacuée en reliant la sortie 13 à la sortie d'évacuation 15 au lieu de la relier à la sortie de recyclage 39.

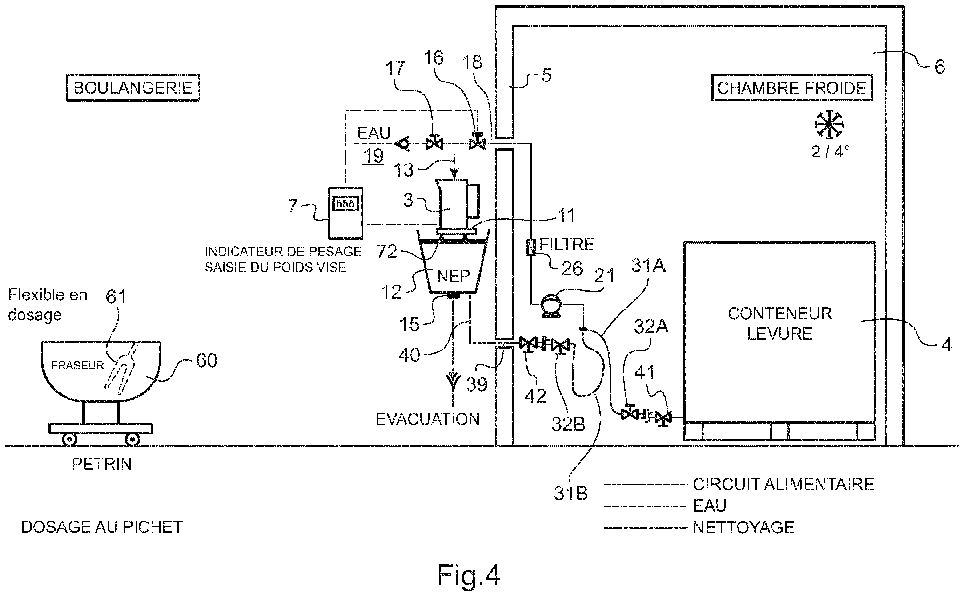

La figure 4 représente schématiquement un exemple d'un système de distribution de levure liquide en boulangerie selon un mode de réalisation de l'invention, correspondant à un système de dosage au pichet. Le réservoir 4 de levure liquide est disposé dans la chambre froide 6 sur la paroi 5 de laquelle sont fixés les panneaux interne et externe non représentés ici pour des raisons de simplicité. Le réservoir 4 est un conteneur reposant sur une palette, il est donc amovible par rapport à la chambre froide 6 et peut être transporté par un charriot élévateur. Un pétrin mobile 60, sur roulettes, comprenant un fraseur 61 va être alimenté en levure liquide à l'aide d'un pichet 3 lequel va être rempli avec de la levure liquide lorsqu'il est posé sur la table de dosage 10. Une armoire maître 7 de consigne de quantité de levure est située sur la même cloison et du même côté de la cloison que le panneau externe 1. L'armoire maître 7 de consigne n'est quant à elle pas pré-montée sur le panneau externe 1. L'utilisateur, c'est-à-dire le boulanger, donne une consigne de quantité de levure liquide au travers d'une interface homme machine de l'armoire maître 7, par exemple à l'aide d'un ensemble comprenant un clavier et un écran.

Sur la figure 4, sont en réalité représentées deux configurations alternatives. Une première configuration représente la circulation de levure liquide dans le circuit de circulation de levure liquide, elle correspond aux positions de raccordement 31A et 32A respectivement du flexible 31 et de la vanne manuelle 32. Une deuxième configuration représente la circulation d'eau de nettoyage dans le circuit de recyclage d'eau de nettoyage, elle correspond aux positions de raccordement 31B et 32B respectivement du flexible 31 et de la vanne manuelle 32.

La circulation de levure liquide dans le circuit de circulation de levure liquide est le suivant. La poussée de la levure liquide dans le circuit de circulation de levure liquide est essentiellement assurée par l'ensemble de pompage 21. De la levure liquide sort du réservoir 4, traverse une vanne manuelle 41 ouverte, cette vanne manuelle 41 étant fermée lorsque le flexible 31 n'est pas raccordé au réservoir 4, traverse la vanne 32A, circule dans le flexible 31A, est aspiré en amont et refoulé en aval de l'ensemble de pompage 21, traverse le filtre 26 de levure liquide, traverse la paroi 5 de la chambre froide 6 pour aboutir au niveau de l'arrivée 18 de levure liquide. Cette levure liquide traverse la vanne de dosage 16 de levure liquide, qui est ouverte tant que la quantité de levure liquide consignée n'est pas atteinte et qui se ferme dès que la quantité de levure liquide consignée est atteinte. La vanne de dosage 17 d'eau de nettoyage est fermée. Par conséquent, cette levure liquide se déverse par la sortie commune 13 dans le pichet 3. La partie pivotante 14 de la sortie commune 13 est absente (configuration représentée sur la figure 4). Une fois la vanne de dosage 16 de levure liquide fermée et le pichet 3 rempli de la quantité de levure liquide préalablement consignée par l'utilisateur sur l'armoire maître 7, l'opération de dosage de levure liquide est terminée, et l'utilisateur peut repartir vers son pétrin 60 avec son pichet 3 remplie de levure liquide.

La circulation d'eau de nettoyage dans le circuit de circulation d'eau est le suivant. La poussée de la levure liquide dans le circuit de circulation de levure liquide est essentiellement assurée par l'ensemble de pompage 21. La partie pivotante 14 de la sortie commune 13 est présente tandis que le pichet 3 a été retiré ainsi que le couvercle 72 (configuration non représentée sur la figure 4). La partie pivotante 14 de la sortie commune 13 est dirigée vers l'intérieur de la cuve de nettoyage 12. De l'eau arrive par l'arrivée d'eau 19, traverse la vanne de dosage 17 d'eau de nettoyage, qui reste ouverte jusqu'à ce que le circuit de recyclage d'eau de nettoyage soit plein d'eau et qui est fermée ensuite pour que l'eau puisse tourner en boucle dans le circuit de recyclage d'eau de nettoyage afin de laisser le détergent agir pendant un temps suffisant, par exemple pendant environ 20 minutes. Cette eau de nettoyage se déverse à l'intérieur de la cuve de nettoyage 12 dans laquelle est également versé le détergent par l'extérieur par l'utilisateur, au début de la phase de lavage. Ensuite, cette eau de nettoyage quitte la cuve de nettoyage 12 par la sortie 40, circule dans la connexion de recyclage 39 qui traverse la paroi 5 de la chambre froide 6, traverse une vanne manuelle 42 ouverte, cette vanne manuelle 42 étant fermée lorsque le flexible 31 ne lui est pas raccordé, traverse la vanne 32B, circule dans le flexible 31B, est aspiré en amont et refoulé en aval de l'ensemble de pompage 21, traverse le filtre 26, retraverse la paroi 5 de la chambre froide 6, traverse la vanne de dosage 16 qui est ouverte. La vanne de dosage 17 d'eau de nettoyage est fermée. Par conséquent, cette eau de nettoyage se déverse par la sortie commune 13 à nouveau dans la cuve de nettoyage 12, et le cycle continue le temps que le détergent contenu dans l'eau de nettoyage qui circule ait pu agir pour nettoyer tout le circuit de circulation d'eau.

Une fois que le détergent a fini d'agir, la partie pivotante 14 de la sortie commune 13 est redirigée vers la sortie d'évacuation 15, et l'eau de nettoyage sale est évacuée vers l'égout. La phase de lavage est terminée. Avant la phase de lavage, il y a une phase de prélavage avec de l'eau seule, c'est-à-dire sans adjonction de détergent, et après la phase de lavage, il y a une phase de rinçage avec de l'eau seule. La phase de rinçage avec de l'eau seule et/ou la phase de prélavage peuvent être réalisées sans recyclage d'eau, c'est-à-dire avec une évacuation de l'eau de nettoyage dès qu'elle a fait un tour.

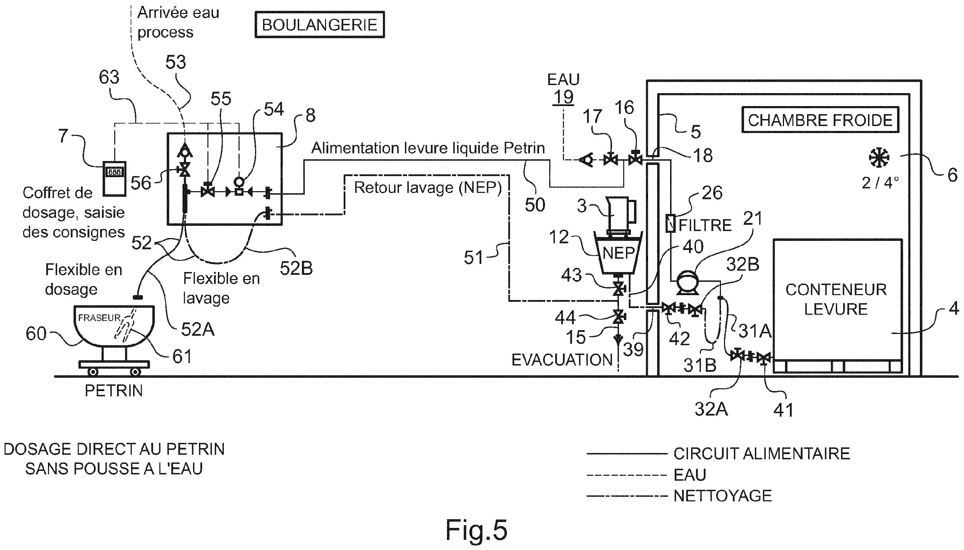

La figure 5 représente schématiquement un exemple d'un système de distribution de levure liquide en boulangerie selon un mode de réalisation de l'invention, correspondant à un système de dosage direct au pétrin sans pousse à l'eau.

La circulation de levure liquide dans le circuit de circulation de levure liquide se déroule de manière identique ou similaire à la figure 4, jusqu'à son arrivée au niveau de la vanne de dosage 16 de levure liquide. Cette levure liquide traverse la vanne de dosage 16 de levure liquide qui est ouverte. La vanne de dosage 16 de levure liquide permet ici de faire un dosage au pichet en mode dégradé, notamment lorsque le dosage direct au pétrin est devenu impossible. La vanne de dosage 17 d'eau de nettoyage est fermée. Au lieu de se déverser par la sortie commune 13 dans un pichet 3 comme sur la figure 4, cette levure liquide part dans une tuyauterie 50 qui peut être longue de plusieurs mètres, voire supérieure à 10 mètres et même atteindre 20 ou 30 mètres, voire plus, pour traverser ensuite un débitmètre 54, une vanne 55 automatique qui est ouverte tant que la quantité de levure liquide consignée n'est pas atteinte et qui se ferme dès que la quantité de levure liquide consignée est atteinte. Une arrivée d'eau 53 est reliée à une vanne 56 manuelle, ouverte le temps que l'utilisateur remplisse le pétrin 60 de la quantité d'eau voulue, à laquelle est mélangée la levure liquide en provenance de la vanne 55 automatique. Lorsque la vanne 55 automatique est ouverte, la vanne 56 manuelle devrait être fermée. Lorsque la vanne manuelle 56 est ouverte, la vanne 55 automatique est fermée. Aussi bien la levure liquide en provenance de la vanne 55 automatique que l'eau en provenance de la vanne 56 manuelle vont se déverser dans le pétrin 60 au travers du flexible 52, raccordé dans sa position 52A de manière à aboutir juste au-dessus du pétrin 60. Les vannes 55 et 56, ainsi que le débitmètre 54 sont regroupés dans un tableau 8 relié à ou intégré dans l'armoire maître 7 dont la consigne pilote, au travers de la liaison électrique 63, aussi bien le débitmètre 54 que la vanne 55. Cette armoire maître 7 est déportée par rapport à la chambre froide 6.

La circulation d'eau de nettoyage dans le circuit de circulation d'eau est le suivant. De l'eau arrive par l'arrivée d'eau 19, traverse la vanne de dosage 17 d'eau de nettoyage, qui reste ouverte jusqu'à ce que le circuit de recyclage d'eau de nettoyage soit plein d'eau et qui est fermée ensuite pour que l'eau puisse tourner en boucle dans le circuit de recyclage d'eau de nettoyage afin de laisser le détergent agir pendant un temps suffisant, par exemple pendant environ 20 minutes. Au lieu de se déverser à l'intérieur de la cuve de nettoyage 12 par la sortie commune comme sur la figure 4, cette eau de nettoyage part dans une tuyauterie 50 d'alimentation qui peut être longue de plusieurs mètres, voire supérieure à 10 mètres et même atteindre 20 ou 30 mètres, voire plus, pour traverser ensuite un débitmètre 54, une vanne 55 automatique qui est ouverte. La vanne 56 manuelle est fermée. L'eau de nettoyage en provenance de la vanne 55 automatique traverse le flexible 52, raccordé dans sa position 52B à une tuyauterie 51 de retour qui remonte au travers d'une vanne ouverte 43, la vanne 44 étant fermée, pour aboutir dans la cuve de nettoyage 12, laquelle sert de réservoir à volume variable, pour ressortir par la sortie 40 et continuer de circuler dans le circuit de circulation d'eau de manière identique ou similaire à la figure 4, jusqu'à son arrivée au niveau de la vanne de dosage 16 de levure liquide. Cette eau de nettoyage traverse la vanne de dosage 16 de levure liquide qui est ouverte, la vanne de dosage 17 d'eau de nettoyage étant fermée, et le cycle recommence.

Une fois que le détergent a fini d'agir, après avoir traversé la tuyauterie 51 de retour, l'eau de nettoyage est redirigée vers la sortie d'évacuation 15 par l'intermédiaire d'une vanne 44 ouverte, la vanne 43 étant alors fermée, et l'eau de nettoyage sale est évacuée vers l'égout. La phase de lavage est terminée. Avant la phase de lavage, il y a une phase de prélavage avec de l'eau seule, c'est-à-dire sans adjonction de détergent, et après la phase de lavage, il y a une phase de rinçage avec de l'eau seule.

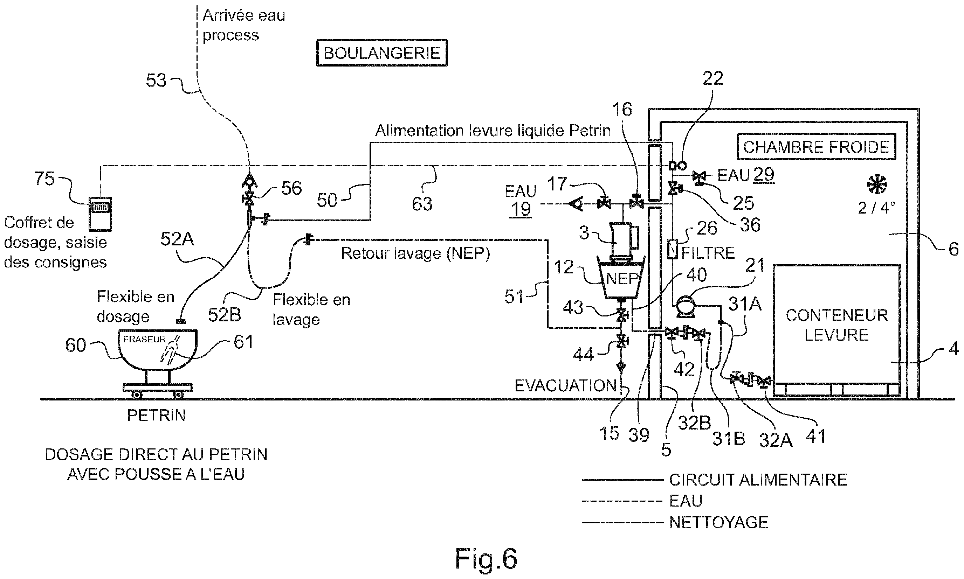

La figure 6 représente schématiquement un exemple d'un système de distribution de levure liquide en boulangerie selon un mode de réalisation de l'invention, correspondant à un système de dosage direct au pétrin avec pousse à l'eau. Deux modes de fonctionnement sont possibles pour l'alimentation en levure liquide.

Dans un premier mode de fonctionnement, la vanne 36 étant fermée, tout se passe de manière identique ou similaire à la figure 4, la levure liquide se déversant dans le pichet 3 au travers de la vanne de dosage 16 de levure liquide après avoir traversé le filtre 26 de levure liquide.

Dans un deuxième mode de fonctionnement, la vanne de dosage 16 de levure liquide étant fermée, après avoir traversé le filtre 26 de levure liquide, la levure liquide traverse une vanne 36 automatique qui est ouverte, la vanne 25 automatique située en aval de l'arrivée d'eau 29 étant fermée, puis traverse un débitmètre 22. La vanne 36 automatique reste ouverte tant que la quantité de levure liquide consignée n'est pas atteinte et se ferme dès que la quantité de levure liquide consignée est atteinte. Ensuite, cette levure liquide part dans une tuyauterie 50 qui peut être longue de plusieurs mètres, voire supérieure à 10 mètres et même atteindre 30 mètres, voire plus. Une fois la vanne 36 automatique fermée, la vanne 25 automatique s'ouvre, et de l'eau, en provenance de l'arrivée d'eau 29, pousse la levure liquide qui se trouve dans la tuyauterie 50 d'alimentation. Cette eau qui pousse la levure liquide va elle-même se déverser dans le pétrin 60, poussée par la prochaine dose de levure liquide qui sera elle-même poussée par de l'eau dans le pétrin 60 suivant.

Par ailleurs, un fonctionnement simultané avec les vannes 16 et 36 ouvertes en même temps peut également être envisagé.

Une arrivée d'eau 53 est reliée à une vanne 56 manuelle, ouverte le temps que l'utilisateur remplisse le pétrin 60 de la quantité d'eau voulue, à laquelle est mélangée la levure liquide en provenance de la tuyauterie 50 d'alimentation. Lorsque la vanne 36 automatique est ouverte, la vanne 56 manuelle devrait être fermée. Lorsque la vanne manuelle 56 est ouverte, la vanne 36 automatique est fermée. Aussi bien la levure liquide en provenance de la vanne 36 automatique que l'eau en provenance de la vanne 56 manuelle vont se déverser dans le pétrin 60 au travers du flexible 52, raccordé dans sa position 52A de manière à aboutir juste au-dessus du pétrin 60. Les vannes 36 et 25 ainsi que le débitmètre 22, sont regroupés sur le panneau interne 2 fixé contre la paroi 5 de la chambre froide 6. Une armoire esclave 75 envoie une consigne pilote, au travers de la liaison électrique 63, aussi bien vers le débitmètre 22 que la vanne 36. Dans un exemple non limitatif, dans le pétrin 60, sont mélangés environ 2 litres de levure liquide à environ 40 à 50 litres d'eau au total. La pousse à l'eau est préférentiellement réalisée à raison de 10 litres de liquide pour 30 mètres de tuyauterie.

La circulation d'eau de nettoyage dans le circuit de circulation d'eau est le suivant. De l'eau arrive par l'arrivée d'eau 19, traverse la vanne 17 manuelle ouverte, rejoint la cuve de nettoyage 12 puis la sortie 40 avant de remonter vers l'ensemble de pompage 21 jusqu'à ce que le circuit de recyclage d'eau de nettoyage soit plein d'eau et se fermant ensuite pour que l'eau puisse tourner en boucle dans le circuit de recyclage d'eau de nettoyage afin de laisser le détergent agir pendant un temps suffisant, par exemple pendant environ 20 minutes. A la sortie de la tuyauterie 50 d'alimentation, l'eau de nettoyage part dans le flexible 52 dans sa position de raccordement 52B, et le cycle de nettoyage se déroule de manière identique ou similaire à celui décrit en liaison avec la figure 5.

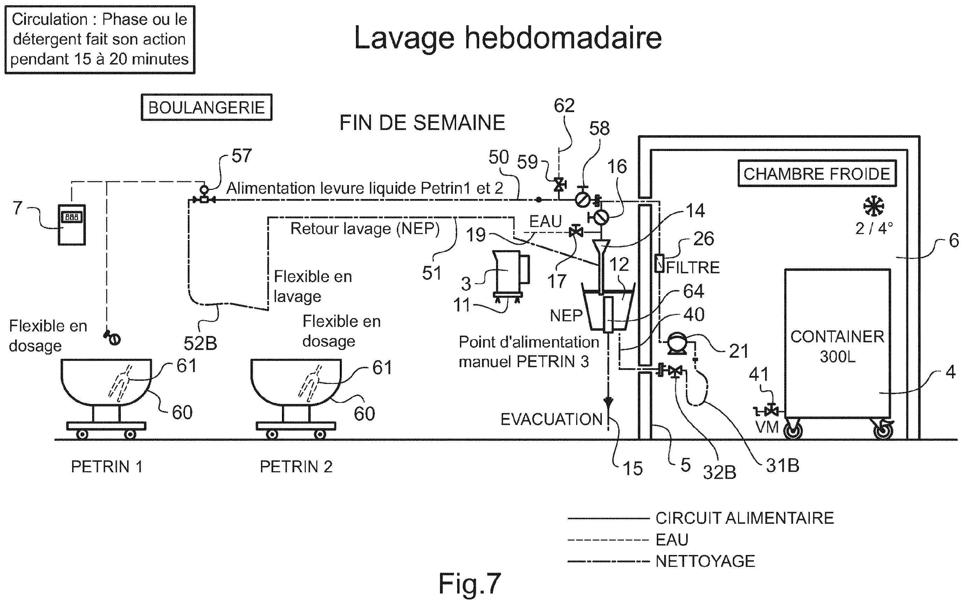

La figure 7 représente schématiquement un exemple d'un système de distribution de levure liquide en boulangerie selon un mode de réalisation de l'invention, dans une configuration de lavage hebdomadaire du système avec recyclage de l'eau de lavage.

Le lavage hebdomadaire, correspondant à un arrêt prolongé du système de distribution de levure liquide, correspond plus précisément à un procédé de nettoyage comprenant préférentiellement trois étapes. La première étape est un prélavage, c'est-à-dire un lavage de tout le circuit de distribution de levure liquide avec seulement de l'eau, de manière à vider le circuit de distribution de levure liquide de l'essentiel de la levure liquide qui y reste. La deuxième étape est un lavage proprement dit, c'est-à-dire un lavage de tout le circuit de distribution de levure liquide avec de l'eau et du détergent. Le détergent est ajouté avantageusement directement dans la cuve de nettoyage. Dans cette deuxième étape, une première phase de 15 à 20 minutes est réalisée avec un recyclage de cette eau de lavage comprenant le détergent, pour que ce détergent ait bien le temps d'agir, suivie d'une deuxième phase plus courte qui est réalisée avec une évacuation de cette eau de lavage sale. La troisième étape est un rinçage, c'est-à-dire un lavage de tout le circuit de distribution de levure liquide avec seulement de l'eau de manière à éliminer les traces restantes de détergent. Chacune de ces phases de nettoyage va suivre le cycle suivant, mais si la phase de lavage présente généralement un recyclage pour économiser l'eau et le détergent, les phases de prélavage et de rinçage peuvent être effectuées en circuit ouvert, c'est-à-dire avec évacuation de l'eau de nettoyage dès que celle-ci a fait un tour.

La circulation d'eau de nettoyage dans le circuit de circulation d'eau se déroule de la manière suivante. De l'eau arrive par l'arrivée d'eau 19, traverse la vanne 17 ouverte, rejoint la cuve de nettoyage 12 puis la sortie 40 avant de remonter vers l'ensemble de pompage 21 jusqu'à ce que le circuit de recyclage d'eau de nettoyage soit plein d'eau, et se fermant ensuite pour que l'eau puisse tourner en boucle dans le circuit de recyclage d'eau de nettoyage afin de laisser le détergent agir pendant un temps suffisant, par exemple pendant environ 20 minutes. A la sortie de la tuyauterie 50 d'alimentation, l'eau de nettoyage traverse un débitmètre 57 et part dans le flexible 52 dans sa position de raccordement 52B.

Ensuite, l'eau de nettoyage traverse le flexible 52, raccordé dans sa position 52B à une tuyauterie 51 de retour qui remonte pour aboutir dans la partie pivotante 14 de la sortie commune 13 orientée vers l'intérieur de la cuve de nettoyage 12, laquelle sert de réservoir à volume variable. Cette eau de nettoyage va se déverser à l'intérieur de la cuve de nettoyage 12 dans laquelle est également versé le détergent par l'extérieur et par l'utilisateur, au début de la phase de lavage, avant de ressortir par la sortie 40 et de continuer de circuler dans le circuit de circulation d'eau de manière identique ou similaire à la figure 4, jusqu'à sa retraversée de la paroi 5 de chambre froide 6 vers le panneau externe 1, et à son arrivée au niveau de la vanne 58 alors ouverte. Cette eau de nettoyage traverse la vanne 58 qui est donc ouverte, la vanne 59 étant alors fermée et la vanne de dosage 16 de levure liquide étant également fermée, et le cycle continue le temps que le détergent contenu dans l'eau de nettoyage qui circule ait nettoyé tout le circuit de circulation d'eau. Le réservoir 4 est déconnecté du circuit de circulation interne de levure liquide, la vanne 41 manuelle est donc fermée.

Une fois que le détergent a fini d'agir, la partie pivotante 14 de la sortie commune 13 est redirigée vers la sortie d'évacuation 15, et l'eau de nettoyage sale est évacuée vers l'égout. La phase de lavage est terminée. Avant la phase de lavage, il y a une phase de prélavage avec de l'eau seule, c'est-à-dire sans adjonction de détergent, et après la phase de lavage, il y a une phase de rinçage avec de l'eau seule.

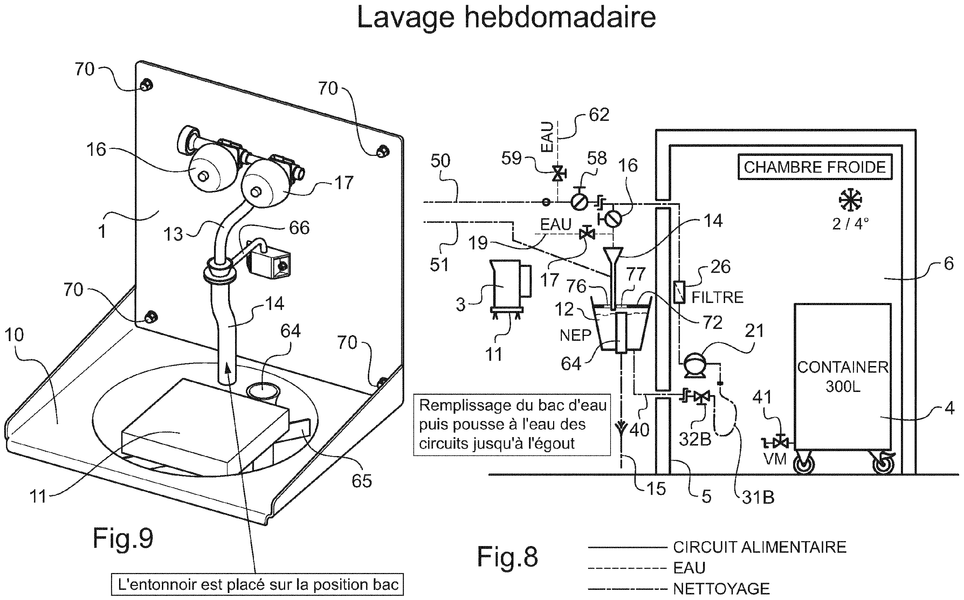

Les figures 8 et 9 représentent schématiquement des parties et des détails du système représenté sur la figure 7. Sur la figure 8, la cuve de nettoyage 12 est cylindrique, elle comprend un tube interne d'évacuation 64. Ce tube interne d'évacuation 64 ne communique pas avec le fond de la cuve de nettoyage 72, mais débouche directement dans la sortie d'évacuation 15. La cuve de nettoyage 12 est recouverte par un couvercle 72. Ce couvercle 72 comporte deux orifices 76 et 77. L'orifice 76 est adapté pour recevoir le bas de la partie pivotante 14 pour que l'eau de nettoyage puisse se déverser dans le fond de la cuve de nettoyage 12, c'est-à-dire lorsque l'eau de nettoyage circule en recyclage, ce qui correspond à la disposition des figures 8 et 9 où le bas de la partie pivotante 14 est placé dans l'orifice 76. L'orifice 77 est adapté pour recevoir le bas de la partie pivotante 14 pour que l'eau de nettoyage puisse se déverser dans le tube d'évacuation 64 avant d'être évacuée par la sortie d'évacuation 15, c'est-à-dire lorsque l'eau de nettoyage sale est en train d'être évacuée.

Sur la figure 9, en plus du tube d'évacuation 64, est aussi représenté un trop plein 65 évitant à la cuve de nettoyage 12 de déborder. Une barre 66 présente l'une de ses extrémités fixée sur le panneau externe 1, tandis que son autre extrémité se termine en anneau support apte à supporter le haut de la partie pivotante 14 qui ici, n'est pas vissée sur le reste de la sortie commune 13 par une bague, mais simplement évasée et disposée à la manière d'un entonnoir sous cette sortie commune 13. La barre 66 est articulée par pivotement par rapport au panneau externe 1 de manière à permettre le pivotement de la partie pivotante 14. La table de dosage 10 est préférentiellement une plaque ou une feuille de métal présentant des rabats situés entre la paroi 5 de chambre froide 6 et le panneau externe 1, de manière à ce que les longues vis 70 traversent ces rabats avant de déboucher à l'intérieur de la chambre froide 6, où des boulons 71 sont vissés dessus. Alternativement, la table de dosage 10 peut avoir été soudée préalablement sur le panneau externe 1 avant que celui-ci soit fixé contre la paroi 5 de chambre froide 6. La table de dosage 10 étant alors elle aussi pré-montée sur le panneau externe 1, cette soudure est effectuée en atelier et non pas sur site lors de l'installation en boulangerie.

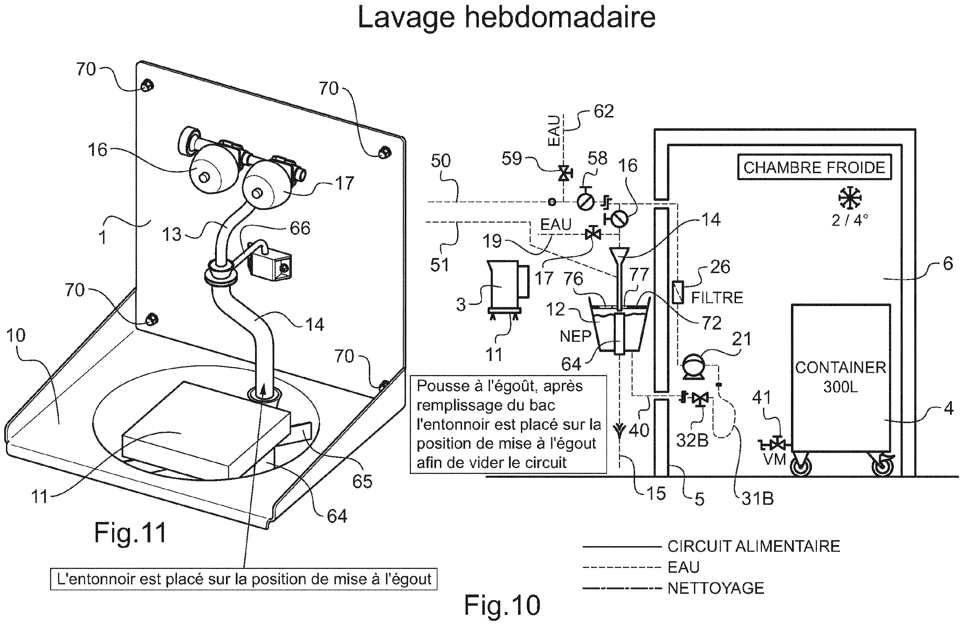

Les figures 10 et 11 représentent schématiquement des parties et des détails du système représenté sur la figure 7, mais dans une configuration de lavage hebdomadaire du système avec évacuation de l'eau de lavage. L'orifice 77 est adapté pour recevoir le bas de la partie pivotante 14 pour que l'eau de nettoyage puisse se déverser dans le tube d'évacuation 64 avant d'être évacuée par la sortie d'évacuation 15, c'est-à-dire lorsque l'eau de nettoyage sale est en train d'être évacuée, ce qui correspond à la disposition des figures 10 et 11 où le bas de la partie pivotante 14 est placé dans l'orifice 77.

La figure 12 représente très schématiquement un exemple de montage en sandwich des panneaux interne et externe qui enserrent la paroi de chambre froide de manière à rendre le montage autoporteur. Grâce à la coopération des longues vis 70 traversant la paroi 5 de chambre froide 6 avec les boulons 71 vissés sur les longues vis 70, d'une part le panneau externe 1 est plaqué et serré contre la paroi 5 de chambre froide 6 avec une force F1, et d'autre part le panneau interne 2 est plaqué et serré contre la paroi 5 de chambre froide 6 avec une force F2. Les forces de serrage F1 et F2, respectivement des panneaux externe 1 et interne 2, contre la paroi 5 de chambre froide 6 suffisent à maintenir l'ensemble en place, malgré le poids des différents éléments pré-montés sur les panneaux externe 1 et interne 2. Les longues vis 70 traversent librement la paroi 5 de chambre froide 6 au niveau de passages 18 et 39 de taille notablement plus grande que le diamètre de ces longues vis 70.

Bien entendu, la présente invention n'est pas limitée aux exemples et au mode de réalisation décrits et représentés.

## Revendications

1. Dispositif de distribution de levure liquide en boulangerie, comprenant :
- un panneau interne (2) de chambre réfrigérée (6) sur lequel est pré-monté un circuit interne (20) de circulation de levure liquide qui est destiné à être relié à un réservoir (4) de levure liquide et qui comprend un ensemble de pompage (21) ;
- un panneau externe (1) de chambre réfrigérée (6) sur lequel sont pré-montés :
∘ un dispositif de dosage (16) de levure liquide ;
∘ une table de dosage (10) destinée à recevoir un récipient (3) à remplir d'une quantité de levure liquide dosée par ledit dispositif de dosage (16) de levure liquide ;
**caractérisé en ce que**
- ledit panneau interne (2) et ledit panneau externe (1) sont structurés de manière à être destinés à être fixés en sandwich sur une paroi (5) d'une chambre réfrigérée (6) destinée à contenir ledit réservoir (4) ;
- ledit dispositif de dosage (16) de levure liquide est destiné à être relié, au travers de la paroi (5) de chambre réfrigérée (6), audit circuit interne (20).

2. Dispositif de distribution de levure liquide en boulangerie selon la revendication 1, **caractérisé en ce qu'**il comprend aussi :
- une cuve de nettoyage (12) pré-montée sur ledit panneau externe (1) et située sous ladite table de dosage (10) ;
- un dispositif de dosage (17) d'eau de nettoyage pré-monté sur ledit panneau externe (1), destiné à alimenter ladite cuve de nettoyage (12) et destiné à être reliée à une arrivée (19) d'eau de nettoyage.

3. Dispositif de distribution de levure liquide en boulangerie selon la revendication 2,
**caractérisé en ce qu'**il comprend en aval dudit dispositif de dosage (17) d'eau de nettoyage, une sortie (13) d'eau de nettoyage orientable manuellement soit vers ladite cuve (12) soit vers un tuyau interne (64) d'évacuation non communiquant avec le fond de ladite cuve (12), préférentiellement, **en ce que** ladite cuve (12) présente une sortie (13) vers un circuit de recyclage d'eau de nettoyage et **en ce que** ladite cuve (12) est en forme de couronne, de préférence cylindrique, disposée autour dudit tuyau interne (64) d'évacuation,
encore plus préférentiellement, **en ce que** ladite sortie (13) d'eau de nettoyage présente une partie pivotante (14), de préférence au moins doublement coudée.

4. Dispositif de distribution de levure liquide en boulangerie selon l'une quelconque des revendications 2 à 3, **caractérisé en ce que** ledit dispositif de dosage (16) de levure liquide et ledit dispositif de dosage (17) d'eau de nettoyage sont reliés à une sortie commune (13).

5. Dispositif de distribution de levure liquide en boulangerie selon l'une quelconque des revendications précédentes, **caractérisé en ce qu'**aucune soudure n'est réalisée lors de l'installation des panneaux (1, 2) sur la paroi (5) de chambre réfrigérée (6).

6. Dispositif de distribution de levure liquide en boulangerie selon l'une quelconque des revendications précédentes, **caractérisé en ce que** ledit dispositif de dosage (16) de levure liquide est automatique et associé à un système de pesage (11) lequel est intégré à ladite table de dosage (10).

7. Dispositif de distribution de levure liquide en boulangerie selon l'une quelconque des revendications précédentes, **caractérisé en ce qu'**il comprend aussi un débitmètre (22) de levure liquide pré-monté sur le panneau interne (2), ledit circuit interne (20) comprenant un embranchement (23) relié audit débitmètre (22),
et/ ou **en ce que** ledit circuit interne (20) comprend un autre embranchement (33) destiné à traverser une paroi (5) de chambre réfrigérée (6),
et/ou **en ce que** ledit circuit interne (20) comprend aussi une connexion (28) d'eau pré-montée sur le panneau interne (2), destinée à être reliée à une arrivée d'eau (29).
et/ou **en ce que** ledit circuit interne (20) comprend un filtre à levure (26) situé en aval de l'ensemble de pompage (21).

8. Dispositif de distribution de levure liquide en boulangerie selon l'une quelconque des revendications précédentes, **caractérisé en ce que** tous les raccords (30) de canalisation sont pré-montés sur le panneau interne (2).
et/ou **en ce qu'**il comprend aussi une ou plusieurs vannes (24, 25) pré-montées sur le panneau interne.

9. Système de distribution de levure liquide en boulangerie, comprenant :
- une chambre réfrigérée (6) ;
- un réservoir (4) de levure liquide situé dans ladite chambre réfrigérée (6) ;
- un dispositif de distribution de levure liquide en boulangerie selon l'une quelconque des revendications précédentes, qui est monté en sandwich sur une paroi (5) de ladite chambre réfrigérée (6) et qui est relié audit réservoir (4) de manière à pouvoir pomper de la levure liquide hors dudit réservoir (4).

10. Système de distribution de levure liquide en boulangerie selon la revendication 9, **caractérisé en ce que** le montage dudit dispositif de distribution de levure liquide est autoporteur par pression des panneaux interne (2) et externe (1) l'un et l'autre contre ladite paroi (5) de chambre réfrigérée (6).

11. Système de distribution de levure liquide en boulangerie selon l'une quelconque des revendications 9 à 10, **caractérisé en ce que** ledit réservoir (4) est déplaçable de façon autonome par rapport à ladite chambre réfrigérée (6),
et/ou **en ce que** la capacité dudit réservoir (4) de levure liquide est comprise entre 100 litres et 1000 litres, de préférence comprise entre 100 litres et 600 litres ou entre 300 litres et 1000 litres, encore plus de préférence comprise entre 300 litres et 600 litres.

12. Système de distribution de levure liquide en boulangerie selon l'une quelconque des revendications 9 à 11, **caractérisé en ce que** ledit système est un système de télédistribution comprenant un débitmètre (22) de levure liquide pré-monté sur ledit panneau interne (2) et une tuyauterie (50) longue d'au moins plusieurs mètres, de préférence supérieure à 10 mètres, située en aval du débitmètre (22).

13. Système de distribution de levure liquide en boulangerie selon la revendication 12, **caractérisé en ce qu'**il comprend aussi une armoire esclave (75) de consigne de quantité de levure reliée à une armoire maître (7) de consigne de quantité de levure située sur la même cloison que ledit panneau externe (1).

14. Système de distribution de levure liquide en boulangerie selon l'une quelconque des revendications 9 à 13, **caractérisé en ce qu'**il comprend aussi une connexion de recyclage (39) qui est reliée du côté panneau externe (1) à ladite sortie de ladite cuve de nettoyage (12) et qui est reliée de manière intermittente du côté panneau interne (2) à l'ensemble de pompage (21).

15. Système de distribution de levure liquide en boulangerie selon l'une quelconque des revendications 9 à 14, **caractérisé en ce que** la levure liquide est soit de la crème de levain, soit de la levure liquide proprement dite, laquelle est de préférence stabilisée.

16. Système de distribution de levure liquide en boulangerie selon l'une quelconque des revendications 9 à 15, **caractérisé en ce que** la température de ladite chambre réfrigérée (6) est régulée et comprise entre 1°C et 7°C, et de préférence comprise entre 2°C et 4°C.

17. Procédé d'installation d'un système de distribution de levure liquide en boulangerie selon l'une quelconque des revendications 9 à 16, dans lequel les trous correspondant à des passages de connexion entre panneaux interne (2) et externe (1) à travers une paroi (5) de chambre réfrigérée (6) sont représentés sur un patron de trous à percer dans la paroi (5) de chambre réfrigérée (6), lequel patron est fixé sur ladite paroi (5) de chambre réfrigérée (6) afin de pouvoir percer lesdits trous.

## Patentansprüche

1. Vorrichtung zur Ausgabe von Flüssighefe in einer Bäckerei, aufweisend:
- eine Innenplatte (2) einer Kühlkammer (6), an welcher ein Innenkreislauf (20) für Flüssighefezirkulation vormontiert ist, der mit einem Flüssighefe-Vorratsbehälter (4) zu verbinden ist und der eine Pumpanordnung (21) aufweist;
- eine Außenplatte (1) einer Kühlkammer (6), an welcher vormontiert sind:
- eine Flüssighefe-Dosierungsvorrichtung (16);
- ein Dosierungstisch (10) zur Aufnahme eines Gefäßes (3), das mit einer mithilfe der Flüssighefe-Dosierungsvorrichtung (16) dosierten Flüssighefemenge zu füllen ist;
**dadurch gekennzeichnet, dass**
- die Innenplatte (2) und die Außenplatte (1) derart strukturiert sind, dass sie sich sandwichartig an einer Wand (5) einer Kühlkammer (6), die dafür vorgesehen ist, den Flüssighefe-Vorratsbehälter (4) zu enthalten, anbringen lassen;
- die Flüssighefe-Dosierungsvorrichtung (16) dafür vorgesehen ist, durch die Wand (5) der Kühlkammer (6) hindurch mit dem Innenkreislauf (20) verbunden zu werden.

2. Vorrichtung zur Ausgabe von Flüssighefe in einer Bäckerei nach Anspruch 1, **dadurch gekennzeichnet, dass** sie außerdem aufweist:
- eine Reinigungswanne (12), die an der Außenplatte (1) vormontiert ist und unterhalb des Dosierungstisches (10) angeordnet ist;
- eine an der Außenplatte (1) vormontierte Reinigungswasser-Dosierungsvorrichtung (17), die dafür vorgesehen ist, die Reinigungswanne (12) zu speisen, und dafür vorgesehen ist, an einen Reinigungswasserzulauf (19) angeschlossen zu werden.

3. Vorrichtung zur Ausgabe von Flüssighefe in einer Bäckerei nach Anspruch 2, **dadurch gekennzeichnet,**
**dass** sie stromabwärts der Reinigungswasser-Dosierungsvorrichtung (17) einen Reinigungswasserauslass (13) aufweist, der manuell entweder zu der Wanne (12) hin oder zu einem nicht mit dem Boden der Wanne in Verbindung stehenden inneren Abflussrohr (64) hin orientierbar ist,
vorzugsweise dass die Wanne (12) einen Auslass (13) zu einem Reinigungswasser-Wiedergewinnungskreislauf aufweist und dass die Wanne (12) in Form eines um das innere Abflussrohr (64) angeordneten, vorzugsweise zylindrischen Kranzes ist,
stärker bevorzugt, dass der Reinigungswasserauslass (13) einen vorzugsweise mindestens doppelt gekrümmten Drehabschnitt (14) aufweist.

4. Vorrichtung zur Ausgabe von Flüssighefe in einer Bäckerei nach einem der Ansprüche 2 bis 3, **dadurch gekennzeichnet, dass** die Flüssighefe-Dosierungsvorrichtung (16) und die Reinigungswasser-Dosierungsvorrichtung (17) an einen gemeinsamen Auslass (13) angeschlossen sind.

5. Vorrichtung zur Ausgabe von Flüssighefe in einer Bäckerei nach einem der vorstehenden Ansprüche, **dadurch gekennzeichnet, dass** beim Anbringen der Platten (1, 2) an der Wand (5) der Kühlkammer (6) kein Schweißen durchgeführt wird.

6. Vorrichtung zur Ausgabe von Flüssighefe in einer Bäckerei nach einem der vorstehenden Ansprüche, **dadurch gekennzeichnet, dass** die Flüssighefe-Dosierungsvorrichtung (16) automatisch ist und mit einem Wiegesystem (11) kombiniert ist, das in den Dosierungstisch (10) integriert ist.

7. Vorrichtung zur Ausgabe von Flüssighefe in einer Bäckerei nach einem der vorstehenden Ansprüche, **dadurch gekennzeichnet, dass** sie außerdem einen an der Innenplatte (2) vormontierten Flüssighefe-Durchflussmesser (22) aufweist, wobei der Innenkreislauf (20) eine mit dem Durchflussmesser (22) verbundene Verzweigung (23) aufweist,
und/oder dadurch, dass der Innenkreislauf (20) eine andere Verzweigung (33) aufweist, die dafür vorgesehen ist, sich durch eine Wand (5) der Kühlkammer (6) zu erstrecken,
und/oder dadurch, dass der Innenkreislauf (20) außerdem einen an der Innenplatte (2) vormontierten Wasseranschluss (28) aufweist, der dafür vorgesehen ist, mit einem Wasserzulauf (29) verbunden zu werden,
und/oder dadurch, dass der Innenkreislauf (20) einen stromabwärts der Pumpanordnung (21) angeordneten Hefefilter (26) aufweist.

8. Vorrichtung zur Ausgabe von Flüssighefe in einer Bäckerei nach einem der vorstehenden Ansprüche, **dadurch gekennzeichnet, dass** alle Leitungsanschlüsse (30) an der Innenplatte (2) vormontiert sind,
und/oder dadurch, dass sie außerdem ein oder mehrere an der Innenplatte vormontierte Ventile (24, 25) aufweist.

9. System zur Ausgabe von Flüssighefe in einer Bäckerei, aufweisend:
- eine Kühlkammer (6);
- einen in der Kühlkammer (6) angeordneten Flüssighefe-Vorratsbehälter (4);
- eine Vorrichtung zur Ausgabe von Flüssighefe in einer Bäckerei nach einem der vorstehenden Ansprüche, die sandwichartig an einer Wand (5) der Kühlkammer (6) montiert ist und die mit dem Vorratsbehälter (4) derart verbunden ist, um Flüssighefe aus dem Vorratsbehälter (4) pumpen zu können.

10. System zur Ausgabe von Flüssighefe in einer Bäckerei nach Anspruch 9, **dadurch gekennzeichnet, dass** die Montage der Flüssighefe-Ausgabevorrichtung selbsttragend ist durch Druck sowohl der Innenplatte (2) als auch der Außenplatte (11) gegen die Wand (5) der Kühlkammer (6).

11. System zur Ausgabe von Flüssighefe in einer Bäckerei nach einem der Ansprüche 9 bis 10, **dadurch gekennzeichnet, dass** der Vorratsbehälter (4) auf autonome Weise bezüglich der Kühlkammer (6) verschiebbar ist,
und/oder dadurch, dass das Fassungsvermögen des Flüssighefe-Vorratsbehälters (4) zwischen 100 Liter und 1000 Liter ist, bevorzugt zwischen 100 Liter und 600 Liter oder zwischen 300 Liter und 1000 Liter, stärker bevorzugt zwischen 300 und 600 Liter.

12. System zur Ausgabe von Flüssighefe in einer Bäckerei nach einem der Ansprüche 9 bis 11, **dadurch gekennzeichnet, dass** das System ein Fernausgabesystem ist, das einen an der Innenplatte (2) vormontierten Flüssighefe-Durchflussmesser (22) und eine stromabwärts des Durchflussmessers (22) angeordnete lange Rohranlage (50) von mindestens mehreren Metern, vorzugsweise mehr als 10 Meter, aufweist.

13. System zur Ausgabe von Flüssighefe in einer Bäckerei nach Anspruch 12, **dadurch gekennzeichnet, dass** es außerdem einen Hilfskasten (75) zum Einstellen der Hefemenge aufweist, der mit einem Hauptkasten (7) zum Einstellen der Hefemenge verbunden ist, der an der gleichen Wand wie die Außenplatte (1) angeordnet ist.

14. System zur Ausgabe von Flüssighefe in einer Bäckerei nach einem der Ansprüche 9 bis 13, **dadurch gekennzeichnet, dass** es außerdem einen Rückgewinnungsanschluss (39) aufweist, der von der Seite Außenplatte (1) mit dem Auslass der Reinigungswanne (12) verbunden ist und der auf intermittierende Weise von der Seite Innenplatte (2) mit der Pumpanordnung (21) verbunden ist.

15. System zur Ausgabe von Flüssighefe in einer Bäckerei nach einem der Ansprüche 9 bis 14, **dadurch gekennzeichnet, dass** die Flüssighefe entweder Sauerteig oder Flüssighefe im eigentlichen Sinn ist, die vorzugsweise stabilisiert ist.

16. System zur Ausgabe von Flüssighefe in einer Bäckerei nach einem der Ansprüche 9 bis 15, **dadurch gekennzeichnet, dass** die Temperatur der Kühlkammer (6) geregelt ist und zwischen 1°C und 7°C und vorzugsweise zwischen 2°C und 4°C beträgt.

17. Verfahren zum Anbringen eines Systems zur Ausgabe von Flüssighefe in einer Bäckerei nach einem der Ansprüche 9 bis 16, in welchem die Löcher, die Durchgangsverbindungen zwischen Innenplatte (2) und Außenplatte (1) durch eine Wand (5) einer Kühlkammer (6) entsprechen, auf einer Schablone für in die Wand (5) der Kühlkammer (6) zu bohrende Löcher dargestellt sind, wobei die Schablone an der Wand (5) der Kühlkammer (6) angebracht wird, um die Löcher bohren zu können.

## Claims

1. Device for distributing liquid yeast in a bakery, comprising:
- an inner panel (2) of a refrigerated room (6) on which is pre-mounted an internal circuit (20) for the circulation of liquid yeast which is intended to be connected to a reservoir (4) of liquid yeast and which comprises a pump unit (21);
- an outer panel (1) of a refrigerated room (6) on which are pre-mounted:
- a device for dosing (16) liquid yeast;
- a dosing table (10) intended to receive a container (3) to be filled with a quantity of liquid yeast dosed by said device for dosing (16) liquid yeast:
**characterised in that**
- said inner panel (2) and said outer panel (1) are structured in such a way as to be intended to be fastened as a sandwich on a wall (5) of a refrigerated room (6) intended to contain said reservoir (4);
- said device for dosing (16) liquid yeast is intended to be connected, through the wall (5) of a refrigerated room (6), to said internal circuit (20).

2. Device for distributing liquid yeast in a bakery according to claim 1, **characterised in that** it also comprises:
- a cleaning tank (12) pre-mounted on said outer panel (1) and located under said dosing table (10);
- a device for dosing (17) cleaning water pre-mounted on said outer panel (1), intended to supply said cleaning tank (12) and intended to be connected to a cleaning water inlet (19).

3. Device for distributing liquid yeast in a bakery according to claim 2,
**characterised in that** it comprises downstream of said device for dosing (17) cleaning water, a cleaning water outlet (13) that can be manually oriented either towards said tank (12) or towards an internal discharge pipe (64) that does not communicate with the bottom of said tank (12), preferably, **in that** said tank (12) has an outlet (13) towards a cleaning water recycling circuit and **in that** said tank (12) is in the shape of a crown, preferably cylindrical, arranged around said internal discharge pipe (64), even more preferably, **in that** said cleaning water outlet (13) has a pivoting portion (14), preferably at least doubly bent.

4. Device for distributing liquid yeast in a bakery according to any of claims 2 to 3,
**characterised in that** said device for dosing (16) liquid yeast and said device for dosing (17) cleaning water are connected to a common outlet (13).

5. Device for distributing liquid yeast in a bakery according to any preceding claim,
**characterised in that** no welding is carried out during the installation of the panels (1, 2) on the wall (5) of a refrigerated room (6).

6. Device for distributing liquid yeast in a bakery according to any preceding claim,
**characterised in that** said device for dosing (16) liquid yeast is automatic and associated with a weighing system (11) which is integrated into said dosing table (10).

7. Device for distributing liquid yeast in a bakery according to any preceding claim,
**characterised in that** it also comprises a flowmeter (22) of liquid yeast pre-mounted on the inner panel (2), said internal circuit (20) comprising a junction (23) connected to said flowmeter (22),
and/or **in that** said internal circuit (20) comprises another junction (33) intended to pass through a wall (5) of a refrigerated room (6),
and/or **in that** said internal circuit (20) also comprises a connection (28) for water pre-mounted on the inner panel (2), intended to be connected to a water inlet (29), and/or **in that** said internal circuit (20) comprises a yeast filter (26) located downstream of the pump unit (21).

8. Device for distributing liquid yeast in a bakery according to any preceding claim,
**characterised in that** all of the pipe connectors (30) are pre-mounted on the inner panel (2),
and/or **in that** it also comprises one or more valves (24, 25) pre-mounted on the inner panel.

9. System for distributing liquid yeast in a bakery, comprising:
- a refrigerated room (6);
- a reservoir (4) of liquid yeast located in said refrigerated room (6);
- a device for distributing liquid yeast in a bakery according to any preceding claim, which is mounted as a sandwich on a wall (5) of said refrigerated room (6) and which is connected to said reservoir (4) in such a way as to be able to pump liquid yeast outside of said reservoir (4).

10. System for distributing liquid yeast in a bakery according to claim 9,
**characterised in that** the mounting of said device for distributing liquid yeast is self-supporting via pressure of the inner (2) and outer (1) panels together against said wall (5) of a refrigerated room (6).

11. System for distributing liquid yeast in a bakery according to any of claims 9 to 10,
**characterised in that** said reservoir (4) can be displaced autonomously in relation to said refrigerated room (6),
and/or **in that** the capacity of said reservoir (4) of liquid yeast is between 100 litres and 1000 litres, preferably between 100 litres and 600 litres or between 300 litres and 1000 litres, even more preferably between 300 litres and 600 litres.

12. System for distributing liquid yeast in a bakery according to any of claims 9 to 11,
**characterised in that** said system is a system for remotely distributing comprising a flowmeter (22) of liquid yeast pre-mounted on said inner panel (2) and a pipe (50) at least several metres long, preferably greater than 10 metres, located downstream of the flowmeter (22).

13. System for distributing liquid yeast in a bakery according to claim 12,
**characterised in that** it also comprises a slave cabinet (75) for the setpoint quantity of yeast connected to a master cabinet (7) for the setpoint quantity of yeast located on the same partition wall as said outer panel (1).

14. System for distributing liquid yeast in a bakery according to any of claims 9 to 13,
**characterised in that** it also comprises a recycling connection (39) that is connected on the outer panel (1) side to said outlet of said cleaning tank (12) and which is intermittently connected on the inner panel (2) side to the pump unit (21).

15. System for distributing liquid yeast in a bakery according to any of claims 9 to 14,
**characterised in that** the liquid yeast is either crème de levain, or liquid yeast strictly speaking, which is preferably stabilised.

16. System for distributing liquid yeast in a bakery according to any of claims 9 to 15,
**characterised in that** the temperature of said refrigerated room (6) is regulated and between 1°C and 7°C, and preferably between 2°C and 4°C.

17. Method for installing a system for distributing liquid yeast in a bakery according to any of claims 9 to 16,
wherein the holes corresponding to connection passages between inner (2) and outer (1) panels through a wall (5) of a refrigerated room (6) are represented on a pattern of holes to be drilled in the wall (5) of a refrigerated room (6), said pattern is fastened onto said wall (5) of a refrigerated room (6) in order to be able to drill said holes.
